# EUROPÄISCHE PATENTSCHRIFT

(11) **EP 0 677 457 B1**
(45) Veröffentlichungstag und Bekanntmachung des Hinweises auf die Patenterteilung: **11.02.1998**
(21) Anmeldenummer: 94105630.1
(22) Anmeldetag: 12.04.1994
(51) Int. Cl.: B65D 85/78, B65D 3/20

(54) **Quetschbarer Behälter für Speiseeis**
Sqeezable container for ice cream
Emballage compressible pour crème-glacée

(43) Veröffentlichungstag der Anmeldung: 18.10.1995
(73) Patentinhaber: SEDA S.p.A., I-80022 Arzano-Napoli (IT)
(72) Erfinder: d'Amato, Antonio c/o SEDA S.p.A., I-80022 Arzano-Napoli (IT)
(74) Vertreter: Grünecker, Kinkeldey, Stockmair & Schwanhäusser Anwaltssozietät

(56) Entgegenhaltungen:
- EP-A- 0 487 765
- FR-A- 570 370
- US-A- 1 741 490

## Beschreibung

Die Erfindung betrifft einen quetschbaren Behälter, insbesondere für Speiseeis, mit einem sich von einer Behälteröffnung nach unten verjüngenden Körper, dessen Körperwand durch eine in einem Überlappungsbereich entlang von linker und rechter Mantellinie zusammengehaltene Mantelfläche gebildet ist, welche am unteren Körperende einen flachgedrückten Endbereich aufweist.

Ein solcher Behälter ist beispielsweise aus der EP 0487765 A1 bekannt. Ein in diesem Behälter enthaltenes Speiseeis, insbesondere Wassereis, wird von einem Konsumenten durch Erwärmen des Behälters mit den Händen kontinuierlich aus der Behälteröffnung herausgedrückt und verzehrt. Durch die Körperwärme bildet sich eine schmelzende Gleitschicht zwischen Körperwand und Speiseeis. Aufgrund der Behälterform ist das Speiseeis in einfacher Weise durch allmähliches Zusammenquetschen des Behälters herausdrückbar und kann bei Verringerung des Drucks auf die Körperwand in den Behälter zurückgleiten.

Während des Verzehrs des Speiseeises verflüssigt sich immer mehr mit der erwärmten Körperwand in Kontakt stehendes Speiseeis. Dieses sammelt sich am unteren Körperende oberhalb des flachgeddückten Endbereichs.

Bei dem vorbekannten Behälter ist zu beachten, daß die Körperwand durch eine Mantelfläche gebildet ist, die in einem Überlappungsbereich entlang von linker und rechter Mantellinie zur Bildung des Körpers zusammengehalten ist. Das Zusammenhalten erfolgt bevorzugt durch Verkleben der sich überlappenden Abschnitte der Mantelfläche. Um in diesem Zusammenhang den Körper an einem unteren Körperende abzudichten, weist die Mantelfläche den flachgedrückten Endbereich auf, in dem der Körper vollständig zusammengedrückt ist. Der Überlappungsbereich erstreckt sich entlang des gesamten Körpers, das heißt auch im Endbereich.

Bei dem vorbekannten Behälter ist von Nachteil, daß bei der Herstellung des Endbereichs zum Verschließen des unteren Körperendes insbesondere im Überlappungsbereich und benachbart zu diesem ein Materialstau aufgrund der zusammengedrückten Mantelfläche auftritt. Dieser Materialstau kann dazu führen, daß der Endbereich nicht vollständig flachgedrückt und damit abgedichtet werden kann. Auf diese Weise ist der Behälter zwar bei Verzehr von Speiseeis zunächst am unteren Körperende dicht. Allerdings kann aufgrund des Zusammenquetschen des Behälters zur Entnahme des Speiseeises durch die damit verbundene Beanspruchung des Behälters das untere Körperende undicht werden. Bevorzugt dort wo bei Bildung des Endbereichs ein Materialstau aufgetreten ist. Je stärker der Behälter beim Verzehr des Speiseeises beansprucht wird, desto eher tritt eine solche Undichtigkeit auf.

Der Erfindung liegt daher die Aufgabe zugrunde, ausgehend von dem vorbekannten Behälter diesen dahingehend zu verbessern, daß der Behälter auch bei fortgesetzter Beanspruchung dicht ist, wobei er gleichzeitig die Vorteile des bekannten Behälters beibehält und einfach herstellbar ist.

Zur Lösung dieser Aufgabe ist der Behälter mit den Merkmalen des Oberbegriffs des Anspruchs 1 im Endbereich wenigstens einer Mantellinie mit einem zur anderen Mantellinie offenen Ausschnitt ausgebildet, wobei dieser Ausschnitt zumindest teilweise im Überlappungsbereich angeordnet ist.

Durch die Anordnung eines solchen Ausschnittes ist die Materialstärke im Überlappungsbereich herabgesetzt, wobei gleichzeitig weggedrücktes Material zumindest teilweise vom Ausschnitt aufgenommen werden kann. Auf diese Weise ist ein Materialstau beim Flachdrücken des Endbereichs nahezu vollständig vermieden, so daß auch bei starker Beanspruchung des Behälters dessen Dichtigkeit am unteren Körperende gewährleistet ist. Gleichzeitig wird die sonstige Funktion des Behälters zum Ausdrücken des Speiseeises aus seiner Behälteröffnung in keiner Weise beeinflußt. Weiterhin wird durch die Anordnung eines Ausschnitts die Herstellung des Behälters aus einem einfachen Zuschnitt nur unwesentlich aufwendiger.

Um Materialstau darüberhinausgehend zu verhindern, erweist es sich als günstig, wenn die rechte und die linke Mantellinie wenigstens einen Rechts- beziehungsweise Linksausschnitt aufweisen. Die Ausschnitte können im Prinzip eine beliebige Form haben, wobei allerdings einfache geometrische Formen, wie Dreiecke, Vierecke, Halbkreise oder dergleichen, bevorzugt sind.

Bei einer anderen Ausführungsform der Erfindung kann beispielsweise nur eine Mantellinie einen Ausschnitt aufweisen, wobei die andere Mantellinie einen im wesentlichen komplementären Ansatz aufweist, der bei Herstellen des Endbereichs in den zugehörigen Ausschnitt eingepaßt wird. Auf diese Weise wird der Überlappungsbereich durch das Ineinanderpassen von Ausschnitt und Ansatz unterbrochen, wodurch bei Flachdrücken des Endbereichs entsprechend weggedrücktes Material sich im Bereich von Ausschnitt und Ansatz sammeln kann. Gleichzeitig wird durch das Flach- und Zusanmendrücken im unteren Endbereich eine sichere Abdichtung am unteren Körperende des Behälters gewährleistet.

Bei einer weiteren vorteilhaften Ausführungsform sind Rechts- und Linksausschnitt einander überlappend angeordnet. Der entsprechende Überlapp kann teilweise oder vollständig erfolgen.

Um die Herstellung des erfindungsgemäßen Behälters weiterhin zu vereinfachen, sind Rechts- und Linksausschnitt bevorzugt im wesentlichen gleichförmig ausgebildet.

Um Materialstau sicher zu verhindern und gleichzeitig die Abdichtung weiter zu verbessern, ist es in diesem Zusammenhang günstig, wenn Rechts- und Linksausschnitt jeweils eine gegenüber der übrigen Mantellinie einwärts versetzte, parallele Endkante aufweisen, wobei diese Endkanten auf Stoß angeordnet sind.

Um die Zuordnung der beiden Ausschnitte und deren Herstellung zu vereinfachen, sind Rechts- und Linksausschnitt rechteckförmig.

Zur Herstellung des Überlappungsbereichs und des Endbereichs kann bei einem Ausführungsbeispiel die rechte Mantellinie im Überlappungsbereich außen angeordnet sein. Die linke Mantellinie ist entsprechend im Inneren des Behälters angeordnet, wobei sich die Breite des Überlappungsbereichs im wesentlichen aus dem Abstand von rechter und linker Mantellinie ergibt. Nur im Bereich der Ausschnitte sind die beiden Mantellinien beispielsweise auf Stoß entlang der Endkanten der Ausschnitte angeordnet.

Um die Abdichtung im Endbereich weiterhin zu verbessern, ist bei einer anderen Ausführungsform der Erfindung die rechte Mantellinie im Überlappungsbereich bis zum Rechtsausschnitt außen und vom Rechtsausschnitt bis zum unteren Körperende innen angeordnet. In diesem Fall kreuzen sich die Mantellinien im Bereich der Ausschnitte, wodurch sich in diesem Bereich quasi eine Labyrinthdichtung ergibt.

Bei beiden Ausführungsbeispielen kann unter Aufrechterhaltung der entsprechenden Vorteile die relative Anordnung der Mantellinien vertauscht werden.

Zur einfachen Herstellung des erfindungsgemäßen Behälters ist die Mantelfläche aus einem Zuschnitt in Form eines Kreisringsektors gebildet. Der Zuschnitt wird bevorzugt gleichzeitig mit den entsprechenden Ausschnitten und ansich bekannten Kantenausschnitten für den Endbereich hergestellt. Der Zuschnitt wird zur Bildung des Körpers mit seinen Mantellinien aufeinander zugebogen, wobei eine im wesentlichen kegelstumpfförmige Form entsteht. Zur Herstellung des Kegelstumpfes wird eine Mantellinie mit Abstand zur anderen Mantellinie überlappend angeordnet und die Mantelfläche im Überlappungsbereich mit sich selbst verbunden. Dabei werden die Ausschnitte im Endbereich der Mantelfläche und die bekannten Kantenausschnitte entsprechend einander zugeordnet. Schließlich wird der Kegelstumpf an seinem unteren Körperende unter Bildung des flachgedrückten Endbereichs zusammengepreßt. Dieses Zusammenpressen kann gleichzeitig mit der Verbindung der Mantelfläche im Überlappungsbereich zumindest im Endbereich oder nach bereits vollzogener Verbindung der Mantelfläche im Endbereich erfolgen. Beim Zusammenpressen wird gleichzeitig in ansich bekannter Weise die bleibende Abdichtung des Endbereichs erzeugt.

Um in diesem Zusammenhang die Abdichtung sowohl im Überlappungsbereich als auch im Endbereich zu verbessern, ist es von Vorteil, wenn im Überlappungsbereich und/oder im Endbereich eine Dicht- und Klebefolie angeordnet ist.

Um die Klebefolie nur dort anzuwenden, wo sie gebraucht wird, ist es günstig, wenn die Dicht- und Klebefolie auf einer Innenseite entlang einer Mantellinie der Mantelfläche befestigt ist, um diese eine Mantenlinie auf die Außenseite der Mantelfläche herumgelegt ist und sich im wesentlichen bis zur anderen Mantellinie erstreckt. Wird nun der Überlappungsbereich und/oder der Endbereich gegebenenfalls unter Zufuhr von Wärme zusammengepreßt, so ergibt sich eine innige Verbindung der sich überlappenden Bereiche der Mantelfläche.

Zur besseren und sicheren Handhabung des Behälters ist es weiterhin von Vorteil, wenn Überlappungsbereich und/oder Endbereich auf der Außenseite eine Riffelung aufweisen. Diese kann beispielsweise beim Zusammenpressen von Überlappungsbereich und/oder Endbereich gleichzeitig hergestellt werden. Selbstverständlich kann eine entsprechende Riffelung auch an anderer Stelle auf der Außenseite des Behälters vorgesehen werden. Weiterhin ist es möglich, auf der Innenseite des Behälters Vorsprünge auszubilden, die beispielsweise einem zu schnellen Herausgleiten des Speiseeises aus dem Körper einen Gleitwiderstand entgegensetzen.

Zur optischen Auflockerung und um die Oberfläche des Körpers interessanter zu gestalten, kann die Riffelung abschnittsweise eine andere Ausrichtung und/oder eine andere Riffeldichte aufweisen.

Bevorzugt verlaufen rechte und linke Mantellinie geradlinig, wodurch die Herstellung des entsprechenden Zuschnitts vereinfacht ist. Allerdings können die Mantellinien auch zick-zack-förmig, wellenförmig oder in anderer Weise verlaufen.

Als Material für den Behälter wird bevorzugt ein relativ steifes aber elastisches Material verwendet, wie beispielsweise Papier oder Karton mit einer Polyäthylenbeschichtung, Papier oder Karton mit einer Aluminiumbeschichtung oder dergleichen.

Im folgenden werden vorteilhafte Ausführungsbeispiele der Erfindung anhand der in der Zeichnung dargestellten Figuren näher erläutert und beschrieben:

Es zeigen:
- Fig.1: eine Seitenansicht eines erfindungsgemäßen Behälters;
- Fig.2: eine Vorderansicht des erfindungsgemäßen Behälters; und
- Fig.3: eine Draufsicht auf einen Zuschnitt für den erfindungsgemäßen Behälter.

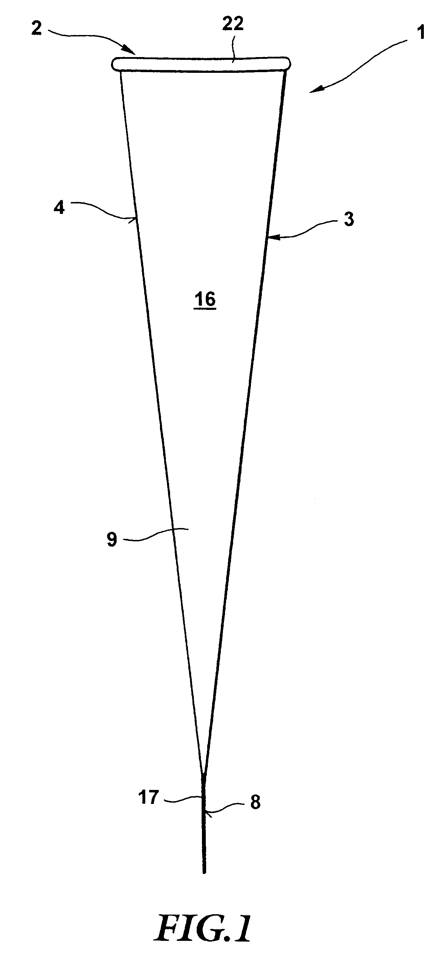

In Figur 1 ist der erfindungsgemäße Behälter 1 in einer Seitenansicht dargestellt. Der Behälter 1 weist einen sich von einer Behälteröffnung 2 nach unten verjüngenden Körper 3 auf. Dieser hat im wesentlichen die Form eines auf dem Kopf stehenden Kegels, der an seiner Spitze, das heißt am unteren Körperende 8, einen flachgedrückten Endbereich 17 aufweist. Dieser Endbereich erstreckt sich in der Darstellung nach Figur 1 senkrecht zur Figurenebene.

Der Körper 3 weist im Prinzip eine glatte Außenseite 16 auf, die durch seine Körperwand 4 gebildet ist. Die Körperwand 4 entspricht dabei einer Mantelfläche 9 des kegelförmigen Körpers 3.

Die Behälteröffnung 2 weist einen umlaufenden Randwulst 22 auf, der durch Umbördelung eines oberen Endbereichs der Mantelfläche 9 gebildet ist. Die Behälteröffnung 2 kann durch einen nicht dargestellten, abziehbaren Behälterdeckel verschlossen sein.

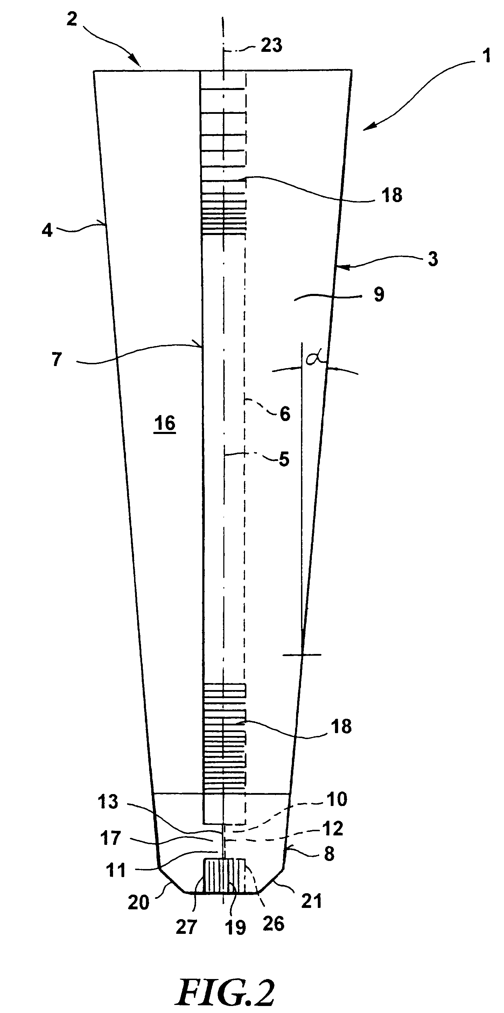

In Figur 2 ist der Behälter aus Figur 1 in einer Vorderansicht dargestellt. Zur Vereinfachung ist der Randwulst 22 aus Figur 1 weggenlassen.

Gleiche Bezugszeichen kennzeichnen gleiche Bauteile und werden nur noch teilweise erwähnt.

In der Draufsicht nach Figur 2 weist der Endbereich 17 am unteren Körperende 8 einen im wesentlichen trapezförmigen Querschnitt auf, wobei zwei Kanten des Trapezes durch Kantenausschnitte 20 und 21 symmetrisch zur Längsmittelachse 23 abgeschnitten sind.

In Richtung der Längsmittelachse 23 ist ein Überlappungsbereich 5 ausgebildet, der sich von der Behälteröffnung 2 bis zum unteren Körperende 8 erstreckt. Der Überlappungsbereich 5 ist dadurch gebildet, daß die Mantelfläche 9 in diesem Bereich überlappend angeordnet ist, wobei eine rechte Mantellinie 7 parallel zu einer linken Mantellinie 6 und beabstandet zu dieser auf der Außenseite 16 der Körperwand 4 angeordnet ist. Im Überlappungsbereich ist die Mantelfläche 9 mit sich selbst verbunden.

Der Überlappungsbereich 5 weist auf seiner Außenseite eine Querriffelung 18 auf, die im wesentlichen senkrecht zur Längsmittelachse 23 verläuft. Die Riffeldichte der Riffelung 18 ist benachbart zur Behälteröffnung 2 geringer als im übrigen Überlappungsbereich.

In der Vorderansicht nach Figur 2 verjüngt sich der Körper 3 in Richtung zum unteren Körperende 8, wobei ein Verjüngungswinkel α mit einer Vertikalen parallel zur Längsmittelachse 23 eingeschlossen wird. Der Verjüngungswinkel α beträgt in etwa 2 bis 15°.

Der Überlappungsbereich 5 ist im Endbereich 17 durch einen Linksausschnitt 10 und einen Rechtsausschnitt 11 unterbrochen. Der Linksausschnitt 10 ist in der linken Mantellinie 6 und der Rechtsausschnitt 11 in der rechten Mantellinie 7 ausgebildet. Die beiden Ausschnitte 10 und 11 sind relativ zueinander so angeordnet, daß Endkanten 12 und 13 der Ausschnitte auf Stoß angeordnet sind, das heißt, daß die Endkante 13 des Rechtsaussohnitts 11 parallel und direkt benachbart rechts von der Endkante 12 des Linksausschnitts 10 verläuft. Anschließend an die Ausschnitte 10 und 11 wird der Überlappungsbereich 5 fortgesetzt, wobei er eine Riffelung 19 aufweist, die parallel zur Längsmittelachse 22 gerichtet ist. In entsprechender Weise kann der gesamte Endbereich 17 mit einer Riffelung 18 beziehungsweise 19 versehen sein.

Bei dem dargestellten Ausführungsbeispiel nach Figur 2 ist der Endabschnitt 27 der rechten Mantellinie 7 auf der Außenseite 16 und ein Endabschnitt 26 der linken Mantellinie 6 auf einer Innenseite des Körpers 3 angeordnet. Diese relative Anordnung von linker und rechter Mantellinie 6 beziehungsweise 7 gilt im gesamten Überlappungsbereich 5. Bei einem anderen Ausführungsbeispiel ist die relative Anordnung der Endabschnitte 26 und 27 umgekehrt, das heißt, der Endabschnitt 26 ist auf der Außenseite 16 und der Endabschnitt 27 auf der Innenseite des Körpers angeordnet.

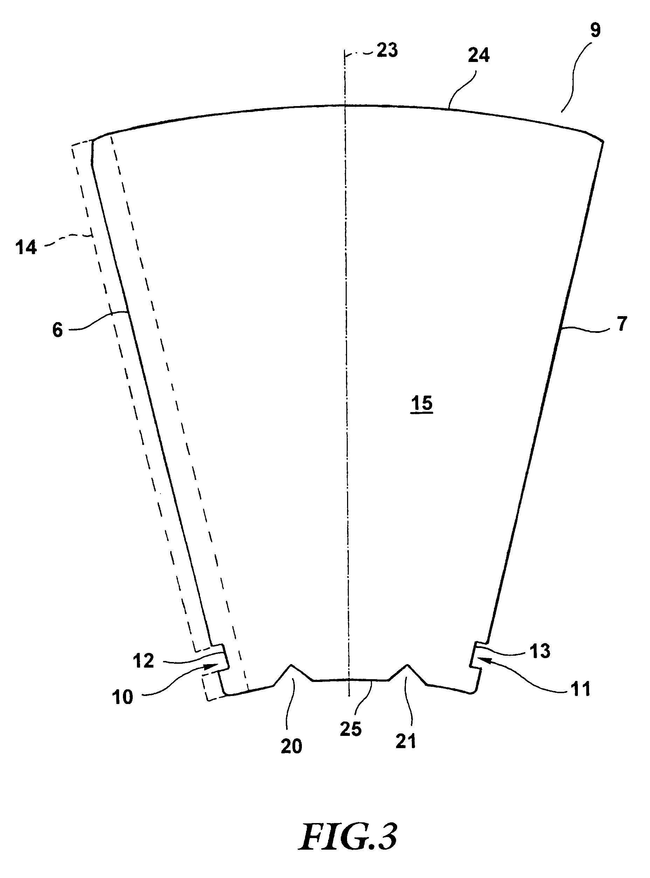

In Figur 3 ist ein Zuschnitt für die Mantelfläche 9 des erfindungsgemäßen Behälters dargestellt. Die Mantelfläche weist im wesentlichen die Form eines Kreisringsektors auf. Zur Bildung des Behälters nach Figuren 1 und 2 wird die Mantelfläche 9 achsensymmetrisch zur Längsmittelachse 23 umgebogen, so daß die rechte Mantellinie 7 über die linke Mantellinie 6 gewölbt und auf der Außenseite 16 des Behälters nach Figur 2 angelegt wird. Auf diese Weise wird die Figurenebene nach Figur 3 zur Innenseite 15 des Behälters 1 nach Figur 2.

Der Zuschnitt ist an seinem oberen Ende durch einen oberen Rand 24 und an seinem unteren Ende durch einen unteren Rand 25 begrenzt. Der obere Rand 24 umrandet die Behälteröffnung 2 nach Figur 1 oder 2 und der untere Rand 25 bildet das untere Körperende 8 nach Figur 2.

Benachbart zum unteren Rand 25 sind in der linken und der rechten Mantellinie 6 und 7 Ausschnitte 10 und 11 ausgebildet. Beide Ausschnitte sind im wesentlichen rechteckförmig, wobei eine längere Rechteckseite eine Endkante 12 beziehungsweise 13 bildet. Die kürzeren Rechteckseiten erstrecken sich senkrecht zur übrigen Mantellinie, wobei die Ausschnitte 10 und 11 gegenüberliegend zu den Endkanten 12 und 13 offen sind.

Im unteren Rand 25 sind symmetrisch beabstandet zur Längsmittelachse 23 die Kantenausschnitte 20 und 21 angeordnet. Die beiden Kantenausschnitte weisen im wesentlichen die Form eines gleichschenkligen, in Richtung zum unteren Rand 25 offenen Dreiecks auf. Entsprechend zu Figur 2 wird der Zuschnitt der Mantelfläche 9 im Endbereich 17 so zusammengefaltet, daß die Schenkel eines jeden Kantenausschnitts 20 beziehungsweise 21 aufeinander zu liegen kommen.

Entlang der linken Mantellinie 6 ist eine Dicht- und Klebefolie 14 auf der Innenseite 15 der Mantelfläche 9 angeordnet. Die Dicht- und Klebefolie 14 steht in etwa zur Hälfte über die linke Mantellinie 6 nach außen über. Im Bereich des Linksausschnitts 10 weist die Folie einen entsprechenden Ausschnitt auf. Beim Zusammensetzen des Behälters wird der überstehende Bereich der Dicht- und Klebefolie 14 auf die Außenseite 16, siehe Figur 2, umgelegt und erstreckt sich in etwa bis unterhalb der rechten Mantellinie 7. Die Folie dient insbesondere zur besseren Verbindung der Mantelfläche 9 mit sich selbst im Überlappungsbereich 5 und zur besseren Abdichtung des Behälters.

## Patentansprüche

1. Quetschbarer Behälter (1), insbesondere für Speiseeis, mit einem sich von einer Behälteröffnung (2) nach unten verjüngenden Körper (3), dessen Körperwand (4) durch eine in einem Überlappungsbereich (5) entlang von linker und rechter Mantellinie (6, 7) zusammengehaltener Mantelfläche (9) gebildet ist, welche am unteren Körperende (8) einen flachgedrückten Endbereich (17) aufweist,
**dadurch gekennzeichnet,**
daß im Endbereich (17) in wenigstens einer Mantellinie (6, 7) ein zur anderen Mantellinie (6, 7) offener Ausschnitt (10, 11) ausgebildet ist, der zumindest teilweise im Überlappungsbereich (5) angeordnet ist.

2. Quetschbarer Behälter nach Anspruch 1,
**dadurch gekennzeichnet,**
daß rechte und linke Mantellinie (6, 7) wenigstens einen Rechtsbeziehungsweise Linksausschnitt (10, 11) aufweisen.

3. Quetschbarer Behälter nach Anspruch 2,
**dadurch gekennzeichnet,**
daß Rechts- und Linksausschnitt (10, 11) einander überlappend angeordnet sind.

4. Quetschbarer Behälter nach einem der vorangehenden Ansprüche,
**dadurch gekennzeichnet,**
daß Rechts- und Linksausschnitt (10, 11) im wesentlichen gleichförmig ausgebildet sind.

5. Quetschbarer Behälter nach einem der vorangehenden Ansprüche,
**dadurch gekennzeichnet,**
daß Rechts- und Linksausschnitt (10, 11) jeweils eine gegenüber der übrigen Mantellinie (6, 7) parallel einwärts versetzte Endkante (12, 13) aufweisen, wobei diese Endkanten (12, 13) auf Stoß angeordnet sind.

6. Quetschbarer Behälter nach einem der vorangehenden Ansprüche,
**dadurch gekennzeichnet,**
daß Rechts- und Linksausschnitt (10, 11) rechteckförmig sind.

7. Quetschbarer Behälter nach einem der vorangehenden Ansprüche,
**dadurch gekennzeichnet,**
daß die rechte Mantellinie (7) im Überlappungsbereich (5) außen angeordnet ist.

8. Quetschbarer Behälter nach einem der vorangehenden Ansprüche,
**dadurch gekennzeichnet,**
daß die rechte Mantellinie (7) im Überlappungsbereich (5) bis zum Rechtsausschnitt (11) außen und vom Rechtsausschnitt (11) bis zum unteren Körperende (8) innen angeordnet ist.

9. Quetschbarer Behälter nach einem der vorangehenden Ansprüche,
**dadurch gekennzeichnet,**
daß die Mantelfläche (9) aus einem Zuschnitt in Form eines Kreisringsektors gebildet ist.

10. Quetschbarer Behälter nach einem der vorangehenden Ansprüche,
**dadurch gekennzeichnet,**
daß zumindestim Überlappungsbereich (5) und/oder in Endbereich (17) eine Dicht- und Klebefolie (14) angeordnet ist.

11. Quetschbarer Behälter nach Anspruch 10,
**dadurch gekennzeichnet,**
daß die Dicht- und Klebefolie (14) auf einer Innenseite (15) entlang einer Mantellinie (6, 7) auf der Mantelfläche (9) befestigt ist, um die eine Mantellinie (6, 7) auf die Außenseite (16) der Mantelfläche (9) herum gelegt ist und sich bis im wesentlichen zur anderen Mantellinie (6, 7) erstreckt.

12. Quetschbarer Behälter nach einem der vorangehenden Ansprüche,
**dadurch gekennzeichnet,**
daß der Überlappungsbereich (5) und/oder der Endbereich (17) auf der Außenseite (16) eine Riffelung (18, 19) aufweisen.

13. Quetschbarer Behälter nach Anspruch 12,
**dadurch gekennzeichnet,**
daß die Riffelung (18, 19) abschnittsweise eine andere Ausrichtung und/oder eine andere Riffeldichte aufweist.

14. Quetschbarer Behälter nach einem der vorangehenden Ansprüche,
**dadurch gekennzeichnet,**
daß rechte und linke Mantellinie (6, 7,) geradlinig verlaufen.

## Claims

1. A squeezable container,(1), especially for ice cream, comprising a body (3) which tapers downwards from a container opening (2) and the wall (4) of which is defined by a circumferential surface (9) held together in an overlapping area (5) extending along a left-hand side and a right-hand side surface line (6, 7), said circumferential surface (9) having at the lower end (8) thereof a flattened end section (17),
**characterized in**
that, in the end section (17), a cut-out portion (10, 11) is formed in at least one surface line (6, 7), said cut-out portion (10, 11) being open towards the respective other surface line (6, 7) and being arranged, at least partially, in the overlapping area (5).

2. A squeezable container according to claim 1,
**characterized in**
that the right-hand side surface line (7) and the left-hand side surface line (6) are provided with at least one right-hand side cut-out portion (11) and at least one left-hand side cut-out portion (10).

3. A squeezable container according to claim 2,
**characterized in**
that the right-hand side cut-out portion (11) and the left-hand side cut-out portion (10) are arranged such that they overlap each other.

4. A squeezable container according to one of the preceding claims, **characterized in**
that the right-hand side cut-out portion (11) and the left-hand side cut-out portion (10) have essentially the same structural design.

5. A squeezable container according to one of the preceding claims, **characterized in**
that the right-hand side cut-out portion (11) and the left-hand side cut-out portion (10) each have an end edge (12, 13) which is displaced inwards relative to the rest of the respective surface line (6, 7) in parallel therewith, said end edges (12, 13) being arranged in abutting relationship.

6. A squeezable container according to one of the preceding claims, **characterized in**
that the right-hand side cut-out portion (11) and the left-hand side cut-out portion (10) are rectangular in shape.

7. A squeezable container according to one of the preceding claims, **characterized in**
that the right-hand side surface line (7) is arranged such that it is the outer surface line in the overlapping area (5).

8. A squeezable container according to one of the preceding claims, **characterized in**
that the right-hand side surface line (7) is arranged in said overlapping area (5) such that it constitutes the outer surface line down to the right-hand side cut-out portion (11) and the inner surface line from said right-hand side cut-out portion (11) to the lower end (8) of the body (3).

9. A squeezable container according to one of the preceding claims, **characterized in**
that the circumferential surface (9) is made from a blank having the shape of a circular-ring sector.

10. A squeezable container according to one of the preceding claims, **characterized in**
that a sealing and adhesive film (14) is arranged at least in the overlapping area (5) and/or in the end section (17).

11. A squeezable container according to claim 10,
**characterized in**
that the sealing and adhesive film (14) is secured to the circumferential surface (9) along one surface line (6, 7) on the inner side (15) of said circumferential surface (9), that it is turned round said one surface line (6, 7) onto the outer side of the circumferential surface (9), and that it extends there essentially up to the other one of said surface lines (6, 7).

12. A squeezable container according to one of the preceding claims, **characterized in**
that the overlapping area (5) and/or the end section (17) is/are provided with a fluting (18, 19) on said outer side (16).

13. A squeezable container according to claim 12,
**characterized in**
that said fluting (18, 19) has, in certain sections thereof, a different orientation and/or a different number of flutes per unit area.

14. A squeezable container according to one of the preceding claims, **characterized in**
that the right-hand side surface line (7) and the left-hand side surface line (6) are straight lines.

## Revendications

1. Récipient écrasable (1), en particulier pour glace alimentaire, comportant un corps (3) se rétrécissant vers le bas à partir d'une ouverture de récipient (2), la paroi dudit corps (4) étant formée d'une surface enveloppante (9) s'étendant dans une zone de chevauchement (5) le long de génératrices gauche et droite, laquelle surface présentant une zone terminale (17) aplatie au niveau de l'extrémité inférieure (8) du corps, caractérisé en ce qu'il est prévu dans la zone terminale (17) d'au moins une génératrice (6, 7) une encoche (10, 11) ouverte vers l'autre génératrice (6, 7) et disposée au moins partiellement dans la zone de chevauchement (5).

2. Récipient écrasable selon la revendication 1, caractérisé en ce que les génératrices droite et gauche (6, 7) présentent au moins une encoche (10, 11) respectivement droite et gauche.

3. Récipient écrasable selon la revendication 2, caractérisé en ce que les encoches droite et gauche (10, 11) sont disposées de manière à se chevaucher.

4. Récipient écrasable selon l'une des revendications précédentes, caractérisé en ce que les encoches droite et gauche (10, 11) ont sensiblement la même forme.

5. Récipient écrasable selon l'une des revendications précédentes, caractérisé en ce que chacune des encoches droite et gauche (10, 11) présente des bords terminaux (12, 13) décalés vers l'intérieur, parallèlement à la génératrice (6, 7) restante, lesdits bords terminaux (12, 13) étant disposés l'un contre l'autre.

6. Récipient écrasable selon l'une des revendications précédentes, caractérisé en ce que les encoches droite et gauche (10, 11) sont rectangulaires.

7. Récipient écrasable selon l'une des revendications précédentes, caractérisé en ce que la génératrice droite (7) est disposée à l'extérieur de la zone de chevauchement (5).

8. Récipient écrasable selon l'une des revendications précédentes, caractérisé en ce que la génératrice droite (7) est disposée à l'extérieur de la zone de chevauchement (5) jusqu'à l'encoche droite (11) et à l'intérieur depuis l'encoche droite (11) jusqu'à l'extrémité inférieure (8) du corps.

9. Récipient écrasable selon l'une des revendications précédentes, caractérisé en ce que la surface enveloppante (9) est formée d'une pièce découpée ayant la forme d'un segment d'anneau de cercle.

10. Récipient écrasable selon l'une des revendications précédentes, caractérisé en ce qu'une feuille d'étanchéité et de collage (14) est disposée au moins dans la zone de chevauchement (5) et/ou dans la zone terminale (17).

11. Récipient écrasable selon la revendication 10, caractérisé en ce que la feuille d'étanchéité et de collage (14) est fixée sur la surface enveloppante (9), sur une face intérieure (15) le long d'une génératrice (6, 7), la feuille (14) étant disposée autour une génératrice (6, 7) sur la face extérieure (16) de la surface enveloppante (9) et s'étendant sensiblement jusqu'à l'autre génératrice (6, 7).

12. Récipient écrasable selon l'une des revendications précédentes, caractérisé en ce que la zone de chevauchement (5) et/ou la zone terminale (17) présente(nt) un cannelage (18, 19) sur la face extérieure (16).

13. Récipient écrasable selon la revendication 12, caractérisé en ce que le cannelage (18, 19) présente par sections une orientation différente et/ou une densité de cannelure différente.

14. Récipient écrasable selon l'une des revendications précédentes, caractérisé en ce que les génératrices droite et gauche (6, 7) sont rectilignes.
